# EUROPÄISCHE PATENTSCHRIFT

(11) **EP 1 728 060 B1**
(45) Veröffentlichungstag und Bekanntmachung des Hinweises auf die Patenterteilung: **09.02.2011**
(21) Anmeldenummer: 04821722.8
(22) Anmeldetag: 17.11.2004
(51) Int. Cl.: G01L 19/00

(54) **SENSORMODUL MIT EINEM KONDENSATOR EMV- UND ESD-SCHUTZ**
SENSOR MODULE PROVIDED WITH CAPACITOR EMC AND ESD PROTECTION
MODULE DE CAPTEURS COMPORTANT UNE PROTECTION DE COMPATIBILITE ELECTROMAGNETIQUE ET CONTRE LES DECHARGES ELECTROSTATIQUES A CONDENSATEURS

(30) Priorität: 12.03.2004 DE 102004012593
(43) Veröffentlichungstag der Anmeldung: 06.12.2006
(73) Patentinhaber: ROBERT BOSCH GMBH, 70442 Stuttgart (DE)
(72) Erfinder: FESSELE, Thomas, 70469 Stuttgart (DE); HABIBI, Masoud, 71701 Schwieberdingen (DE); RÖSSER, Christian, 71723 Grossbottwar-Winzerhausen (DE); LEDERMANN, Markus, 76149 Stuttgart (DE); GEBAUER, Jan, 70839 Gerlingen (DE); TÖWS, Daniel, 99817 Eisenach (DE)
(86) Internationale Anmeldenummer: PCT/EP2004/052986
(87) Internationale Veröffentlichungsnummer: WO 2005/088268

(56) Entgegenhaltungen:
- US-A- 5 948 991
- US-A1- 2003 115 967
- US-B1- 6 272 913
- US-B1- 6 615 669

## Beschreibung

### Stand der Technik

Die Erfindung betrifft ein Sensormodul, insbesondere ein Drucksensormodul mit den Merkmalen des Oberbegriffs des unabhängigen Anspruchs 1.

Zur Verbesserung der elektromagnetischen Verträglichkeit (EMV-Schutz) und zum Schutz gegen elektrostatische Entladungen (ESD-Schutz) werden in Sensormodulen EMV-Kondensatoren eingesetzt. Obwohl es möglich ist, derartige Kondensatoren in den Halbleiterdruckaufnehmer zu integrieren, erfordert dies einen nicht unerheblichen Mehraufwand bei der Herstellung des Druckaufnehmers. Außerdem erfüllen die integrierten Kondensatoren oft die Anforderungen hinsichtlich eines wirksamen ESD-Schutzes nicht. Daher werden die Kondensatoren bei bekannten Sensormodulen an anderer Stelle als die Sensoranordnung in das Sensorgehäuse eingebaut.

Aus der DE 197 31420 A1 ist beispielsweise ein Drucksensormodul in Zweikammerbauweise bekannt. Das Gehäuse weist ein Gehäuseteil mit darin teilweise eingebetteten elektrischen Leitern auf, die über Bonddrahtverbindungen mit einer Leiterplatte kontaktiert sind. Das Sensorgehäuse weist weiterhin einen druckbeaufschlagten ersten Innenraum auf, in dem eine Sensoranordnung angeordnet ist, und einen gegenüber dem ersten Innenraum abgedichteten zweiten Innenraum auf, in dem eine EMV-Schutzschaltung mit Schutzkondensatoren angeordnet ist. Sensoranordnung und EMV-Schutzschaltung sind gemeinsam auf einer Leiterplatte angeordnet. Über Leiterbahnen der Leiterplatte wird die elektrische Verbindung der Schutzschaltung mit der Sensoranordnung hergestellt. In dem ersten Innenraum des Sensorgehäuses ist weiterhin ein rahmenartiges Aufnahmeteil mit einer durch eine umlaufende Wand gebildeten Aufnahme angeordnet, in welche Aufnahme die Sensoranordnung eingesetzt und zum Schutz mit einer in die Aufnahme eingefüllten Schutzabdeckung, beispielsweise einem Silikongel, abgedeckt ist. Nachteilig bei den bekannten Sensormodulen ist, dass die Anordnung der Leiterplatte in den beiden Innenräumen einen relativ großen Aufwand bei der Abdichtung der beiden Innenräume erforderlich macht, da Dichtungen oberhalb und unterhalb der Leiterplatte erforderlich sind, welche in aufwendiger Weise dort angeordnet werden müssen.

### Vorteile der Erfindung

Das erfindungsgemäße Sensormodul mit den Merkmalen des Anspruchs 1 ermöglicht eine einfache und kompakte Bauweise des Sensormoduls, wobei auf eine Leiterplatte als elektrisches Verbindungsmittel verzichtet werden kann. Die Sensoranordnung mit dem Sensorelement ist in ein mit einer Schutzabdeckung gefülltes Aufnahmeteil eingesetzt und mit an dem Aufnahmeteil angeordneten elektrischen Anschlusselementen kontaktiert. Das Aufnahmeteil ist in dem ersten Innenraum des Sensorgehäuses angeordnet. Die Anschlusselemente werden in dem ersten Gehäuseraum mit Anschlussabschnitten der elektrischen Leiter direkt verbunden, was vorteilhaft durch Schweißen erfolgen kann. Der wenigstens eine in dem zweiten Innenraum angeordnete EMV-Kondensator wird über ein elektrisch leitendes Material, insbesondere einen Leitkleber, mit wenigstens einem der elektrischen Leiter verbunden. Besonders vorteilhaft ist, dass die in dem zweiten Innenraum angeordneten Kondensatoren nicht mit einer Gelabdeckung geschützt werden müssen. Wechselwirkungen zwischen dem Gel und dem Leitkleber werden so vermieden.

Da die Sensoranordnung in ein eigenes Aufnahmeteil eingesetzt ist, welches beispielsweise mit einem Gel als Schutzabdeckung gefüllt ist, wird vorteilhaft vermieden, dass das Gel den gesamten ersten Innenraum bedeckt und Lufteinschlüsse im Gel zu einer Beschädigung der Sensoranordnung oder der Bondrahtverbindungen zwischen der Sensoranordnung und den elektrischen Anschlüssen führen können. Da die teilweise in das Gehäuseteil eingebetteten elektrischen Leiter bis zu dem zweiten Innenraum geführt sind, könnte nämlich ansonsten bei einem Unterdruck in dem ersten Gehäuseinnenraum Luft aus dem zweiten Innenraum entlang der elektrischen Leiter bis in den ersten Innenraum gelangen. Würde diese Luft direkt unter dem Gel austreten, so würden sich im Gel Luftbläschen bilden, die bei Druckschwankungen dazu neigen, sich explosionsartig auszudehnen und Beschädigungen am Sensorelement und vor allem an den Bonddrahtverbindungen zu verursachen.

Bei dem erfindungsgemäßen Sensormodul kann Luft, die entlang der elektrischen Leiter in den ersten Innenraum gelangt, vorteilhaft nicht unterhalb der Schutzabdeckung der Sensoranordnung austreten, da sich diese zusammen mit den Bonddrähten in dem Aufnahmeteil befindet. Luftbläschen in der Schutzabdeckung des Sensorelementes werden so vermieden.

Vorteilhafte Ausführungsbeispiele und Weiterentwicklungen der Erfindung werden durch die in den abhängigen Ansprüchen angegebenen Merkmale ermöglicht.

Vorteilhaft ist das Aufnahmeteil in eine an dem ersten Gehäuseteil ausgebildete zweite Aufnahme eingesetzt, welche zweite Aufnahme eine das Aufnahmeteil umgebende Wand aufweist. Zwischen der das Aufnahmeteil umgebenden Wand und dem Aufnahmeteil ist ein die elektrische Verbindungsstelle der elektrischen Leiter und der elektrischen Anschlusselemente abdeckendes Material eingefüllt, wodurch die Verbindungsstelle vor aggressiven Substanzen geschützt wird. Da die elektrische Verbindung der elektrischen Anschlusselemente mit den elektrischen Leitern beispielsweise durch Verschweißen erfolgen kann und daher sehr robust ist, ist eine Beschädigung der elektrischen Verbindungsstelle durch innerhalb der zweiten Aufnahme austretende Luft nicht möglich. Außerdem können hier andere, das Eindringen von Luft ausschließende Materialien als für die Schutzabdeckung der Sensoranordnung gewählt werden.

Besonders einfach ist die Herstellung des erstes Gehäuseteils als Spritzgussteil, in dem die elektrischen Leiter als Stanzgitterteile teilweise eingebettet sind.

Das Sensorgehäuse weist vorteilhaft ein erstes Gehäuseteil und wenigstens ein zweites Gehäuseteil auf, wobei an dem ersten Gehäuseteil oder dem zweiten Gehäuseteil eine Trennwand ausgebildet ist und wobei durch Aufsetzen des zweiten Gehäuseteils auf das erste Gehäuseteil wenigstens der erste Innenraum und vorzugsweise auch der zweite Innenraum gebildet wird. Dadurch, dass eine umlaufende Wand des zweiten Gehäuseteils und eine an dem zweiten Gehäuseteil ausgebildete Trennwand in an dem ersten Gehäuseteil ausgebildete und mit Dichtmaterial gefüllte Nuten eingreifen, wird eine besonders einfache Abdichtung des Sensorgehäuses nach außen (bis auf wenigstens einen Druckanschluss) und eine Abdichtung des ersten Innenraums gegenüber dem zweiten Innenraum erreicht, wobei die Abdichtung vorteilhaft in nur einer Ebene in einem einzigen Prozessschritt angeordnet werden kann.

Das erfindungsgemäße Sensormodul kann vorteilhaft sowohl als Absolutdrucksensor mit einem Druckanschluss als auch als Relativdrucksensor mit zwei Druckanschlüssen ausgestaltet sein.

### Zeichnungen

Ausführungsbeispiele der Erfindung sind in den Zeichnungen dargestellt und werden in der nachfolgenden Beschreibung erläutert. Es zeigt
Fig. 1 ein erstes Ausführungsbeispiel der Erfindung mit einem als Absolutdrucksensor ausgebildeten Sensormodul,
Fig. 2 ein zweites Ausführungsbeispiel der Erfindung mit einem als Relativdrucksensor ausgebildeten Sensormodul.

### Beschreibung der Ausführungsbeispiele

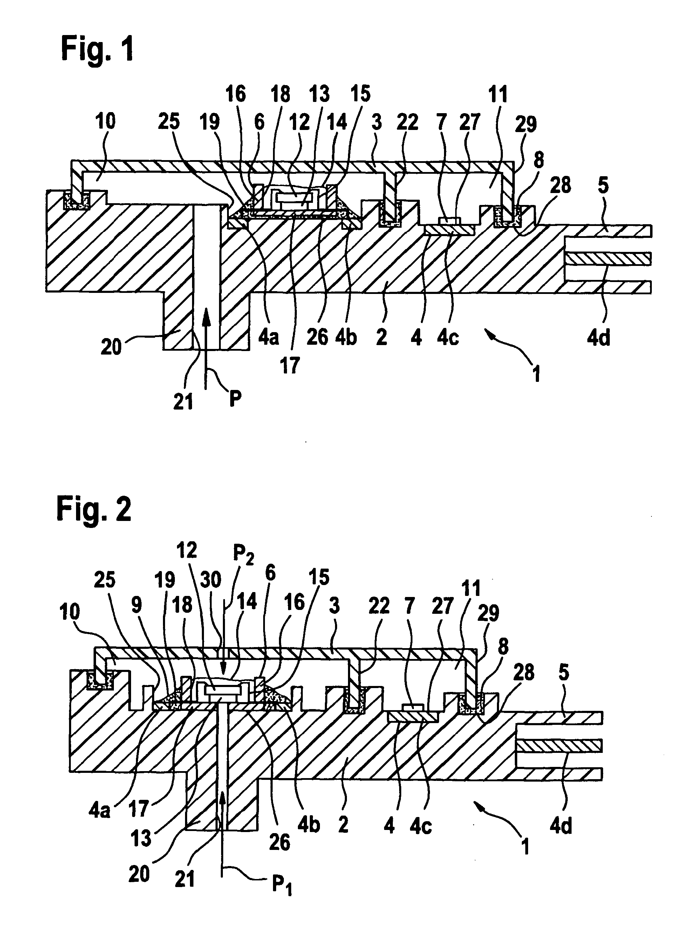

Fig. 1 zeigt ein erstes Ausführungsbeispiel eines Sensormoduls, welches als Drucksensormodul zur Absolutdruckmessung ausgebildet ist. Die Erfindung ist jedoch nicht auf Drucksensoren beschränkt und kann auch in anderen Sensoren zum Einsatz kommen. Das Drucksensormodul 1 weist ein Sensorgehäuse 1 mit einem ersten Gehäuseteil 2 auf, welches als Spritzgussteil mit darin teilweise eingebetteten elektrischen Leitern 4 gefertigt ist. Die elektrischen Leiter 4 können beispielsweise als Stanzgitterteile gebildet sein, wobei mehrere elektrisch voneinander getrennte Stanzgitterbahnen im Kunststoff des Gehäuseteils 1 eingebettet sind. Wie in Fig. 1 zu erkennen ist, können die elektrischen Leiter 4 an einer Seite des Sensorgehäuses 1 zu einem Steckanschluss 5 des Sensormoduls geführt sein, wo Verbindungsabschnitte 4d der Leiter oder damit verbundene Steckerstifte von der Kunststoffumhüllung ausgenommen sind.

Weiterhin ist ein zweites Gehäuseteil 3 als Deckel vorgesehen, welches beispielsweise ebenfalls als Spritzgussteil aus Kunststoff gefertigt ist und auf das erste Gehäuseteil 1 aufgesetzt ist. An dem zweiten Gehäuseteil 3 ist eine Trennwand 22 und eine umlaufende Wand 29 ausgebildet. Beim Aufsetzten des zweiten Gehäuseteils 3 auf das erste Gehäuseteil 2, greift die umlaufende Wand 29 des zweiten Gehäuseteils 3 und die Trennwand 22 in an dem ersten Gehäuseteil 2 korrespondierend ausgebildete Nuten 28 ein, welche zuvor oder anschließend mit einem Dichtmaterial 8, insbesondere einer Dichtklebung beispielsweise mittels eines Silikonklebers, gefüllt werden. Die beiden derart verbundenen Gehäuseteile bilden ein Sensorgehäuse mit einem ersten Innenraum 10 und einem zweiten Innenraum 11, wobei der zweite Innenraum durch die Trennwand 22 von dem ersten Innenraum 10 getrennt ist und gegenüber diesem abgedichtet ist, so dass in den beiden Innenräumen unterschiedliche Atmosphären und Drücke bestehen können. Das erste Gehäuseteil 2 weist weiterhin einen Druckanschluss 20 mit einem Druckkanal 21 auf, welcher in den ersten Innenraum 10 einmündet, so dass ein an dem Druckanschluss 20 anliegender Druck P auch in dem Innenraum 10 herrscht.

Wie in Fig. 1 weiterhin dargestellt ist, weisen die elektrischen Leiter 4 Anschlussabschnitte 4a,4b und 4c auf, die nicht in den Kunststoff des Gehäuseteils 2 eingebettet sind, sondern die an der dem ersten Innenraum 10 oder dem zweiten Innenraum 11 des Sensorgehäuses zugewandten Innenseite des ersten Gehäuseteils 2 von der Umhüllung ausgenommen sind. Wenigstens ein in dem zweiten Gehäuseinnenraum 11 angeordneter Kondensator 7 ist mit einem Anschlussabschnitt 4c eines elektrischen Leiters 4, vorzugsweise mittels eines zwischen dem Anschlussabschnitt 4c und dem Kondensator 7 angeordneten Leitklebers, kontaktiert. Der Kondensator 7 ist ein Schutzkondensator zur Verbesserung der elektromagnetischen Verträglichkeit (EMV-Schutz) des Sensormoduls und zum Schutz gegen elektrostatische Entladungen. Er ist daher zwischen den Verbindungsabschnitten 4d des Steckanschlusses 5 und Anschlussabschnitten 4a,4b angeordnet, welche zur Kontaktierung der Sensoranordnung vorgesehen sind.

Die Sensoranordnung 12,13 umfasst ein Sensorelement 12, beispielsweise einen Halbleiter-Druckaufnehmer mit einem Silizium-Chip, auf dessen Oberseite druckempfindliche Elemente angeordnet sind, und einen Sockel 13. Die Sensoranordnung ist in ein kastenförmiges Aufnahmeteil 6 (Premold) eingesetzt, welches eine durch einen Boden 17 und eine umlaufende Wand 16 gebildete Aufnahme 18 aufweist. Das Aufnahmeteils 6 kann beispielsweise aus Kunststoff bestehen. Das Aufnahmeteil 6 weist weiterhin Anschlusselemente 19 auf, die von der Aufnahme 18 aus durch die umlaufende Wand 16 in den ersten Innenraum 10 geführt sind und dort mit den an der Innenseite des ersten Gehäuseteils 2 angeordneten Anschlussabschnitten 4a,4b (in Fig. 1 sind beispielhaft zwei Anschlussabschnitte 4a und 4b dargestellt) der elektrischen Leiter 4 beispielsweise durch Schweißen verbunden sind Es ist natürlich auch möglich, die elektrische Verbindung der elektrischen Anschlusselemente 19 mit den Anschlussabschnitten 4a,4b durch Löten oder Presskontaktierung oder in anderer geeigneter Weise herzustellen. Die nicht mit den Leitern 4 verbundenen Enden der Anschlusselemente 19 sind im Inneren der Aufnahme 18 beispielsweise über Bonddrahtverbindungen mit dem Sensorelement 12 verbunden. Die Aufnahme 18 des Aufnahmeteils 6 ist zum Schutz des Sensorelementes mit einer Schutzabdeckung 14, beispielsweise einem Gel, gefüllt. Bei einer Druckbeaufschlagung des Innenraums 10 wird der Druck über das elastische Gel auf das Sensorelement 12 übertragen.

Wie in Fig. 1 weiterhin zu erkennen ist, weist die dem ersten Innenraum 10 zugewandte Innenseite des ersten Gehäuseteils 2 eine zweite Aufnahme 26 auf, welche durch eine Vertiefung an der Innenseite des ersten Gehäuseteils 2 ausgebildet wird und eine die zweite Aufnahme 26 begrenzende umlaufende Wand 25 aufweist. Das Aufnahmeteil 6 ist innerhalb der durch die umlaufende Wand 25 begrenzten Aufnahme 26 angeordnet. Zwischen der Wand 25 und dem Aufnahmeteil 6 ist ein die elektrische Verbindungsstelle der elektrischen Leiter 4 und der elektrischen Anschlusselemente 19 abdeckendes Material 9, beispielsweise ein Kleber, insbesondere ein Silikonkleber, angeordnet. Der Kleber kann vorteilhaft zusammen mit der Befüllung der Nuten 28 auf das erste Gehäuseteil 1 aufgetragen werden.

Fig. 2 zeigt ein Ausführungsbeispiel mit einem zur Referenzdruckmessung ausgebildeten Sensormodul. Gleiche Dinge sind mit gleichen Bezugszeichen wie in Fig. 1 versehen. Im Unterschied zu dem in Fig. 1 gezeigten Beispiel ist hier das Aufnahmeteil 6 über dem Druckkanal 21 angeordnet und mit einer Ausnehmung in dem Boden 17 zur Durchführung eines Drucks P1 versehen. Der Sockel 13 weist ebenfalls eine Aussparung auf, so dass die Sensormembran des Sensorelementes 12 von unten mit einem ersten Druck P1 beaufschlagbar ist, der nicht in dem ersten Innenraum 10 herrscht, da der Druckkanal 21 hier gegen den ersten Innenraum 10 abgedichtet ist. Das zweite Gehäuseteil 3 weist einen zweiten Druckanschluss 30 auf, durch den der erste Innenraum 10 und über die nachgiebige Abdeckung 14 aus Gel die Oberseite der Sensormembran des Sensorelementes 12 mit einem Druck P2 als Referenzdruck beaufschlagbar ist.

Wie man in beiden Ausführungsbeispielen erkennen kann, ist das Sensorelement 12 und die Bonddrahtverbindung zu den Anschlusselementen 19 besonders gut gegen Beschädigungen geschützt, da Luft die entlang der in Kunststoff eingespritzten elektrischen Leiter 4 von dem zweiten Innenraum 11 aus in den ersten Innenraum 10 gelangen könnte, dort unterhalb des abdeckenden Materials austritt und daher keine Beschädigung der Bonddrahtverbindung verursachen kann, da die Bonddrahtverbindung geschützt vor dem Eindringen von Luft innerhalb des Aufnahmeteils 6 angeordnet ist.

## Patentansprüche

1. Sensormodul, insbesondere Drucksensormodul, mit einem Sensorgehäuse (1), welches ein Gehäuseteil (2) mit darin teilweise eingebetteten elektrischen Leitern (4) aufweist, wobei in dem Sensorgehäuse ein erster Innenraum (10), in dem eine Sensoranordnung (12,13) angeordnet ist, und ein gegenüber dem ersten Innenraum (10) abgedichteter zweiter Innenraum (11) vorgesehen ist, in dem wenigstens ein Kondensator (7) angeordnet ist, wobei das Sensorgehäuse ein erstes Gehäuseteil (2) und wenigstens ein zweites Gehäuseteil (3) aufweist, wobei an dem ersten Gehäuseteil (2) oder dem zweiten Gehäuseteil (3) eine Trennwand (22) ausgebildet ist und wobei durch Aufsetzten des zweiten Gehäuseteils (3) auf das erste Gehäuseteil (2) der erste Innenraum (10) und auch der zweiten Innenraum (11) ausgebildet wird und wobei in dem ersten Innenraum (10) ein Aufnahmeteil (6) mit einer durch eine umlaufende Wand (16) gebildeten Aufnahme (18) angeordnet ist, in welcher Aufnahme die Sensoranordnung (12,13) eingesetzt und mit einer in die Aufnahme (18) eingefüllten Schutzabdeckung (14) abgedeckt ist, wobei das Sensorgehäuse einen Druckanschluss (20, 30) aufweist, durch den der erste Innenraum (11) und ein Sensorelement (12) der Sensoranordnung mit einem Druck (P1, P2) beaufschlagbar ist, wobei die Sensoranordnung (12,13) mit an dem Aufnahmeteil (6) angeordneten elektrischen Anschlusselementen (19) kontaktiert ist, welche Anschlusselemente (19) von der Aufnahme (18) aus in den ersten Innenraum (10) geführt sind und mit in dem ersten Innenraum (10) an dem ersten Gehäuseteil (2) angeordneten Anschlussabschnitten (4a,4b) der elektrischen Leiter (4) direkt verbunden sind, und wobei der wenigstens eine in dem zweiten Innenraum (11) angeordnete Kondensator (7) über ein elektrisch leitendes Material (27) mit wenigstens einem der elektrischen Leiter (4) verbunden ist.

2. Sensormodul nach Anspruch 1, **dadurch gekennzeichnet, dass** das Aufnahmeteil (6) in eine an dem Gehäuseteil (2) ausgebildete zweite Aufnahme (26) eingesetzt ist, welche zweite Aufnahme eine das Aufnahmeteil (6) umgebende Wand (25) aufweist, und dass zwischen der das Aufnahmeteil umgebenden Wand (25) und dem Aufnahmeteil (6) ein die elektrische Verbindungsstelle der elektrischen Leiter (4) und der elektrischen Anschlusselemente (19) abdeckendes Material (9), insbesondere ein Kleber, eingefüllt ist.

3. Sensormodul nach Anspruch 1, **dadurch gekennzeichnet, dass** das Sensorgehäuse (1) ein als Spritzgussteil gefertigtes erstes Gehäuseteil (2) aufweist, in dem die elektrischen Leiter (4) als Stanzgitterteile teilweise eingebettet sind, welche Stanzgitterteile an einer Seite des Sensorgehäuses zu einem Steckanschluss (5) des Sensormoduls führen.

4. Sensormodul nach Anspruch 14, **dadurch gekennzeichnet, dass** das eine umlaufende Wand (29) des zweiten Gehäuseteils (3) und eine an dem zweiten Gehäuseteil (3) ausgebildete Trennwand (22) in an dem ersten Gehäuseteil (2) ausgebildete und mit Dichtmaterial (8) gefüllte Nuten (28) eingreifen oder dass eine umlaufende Wand des ersten Gehäuseteils und eine an dem ersten Gehäuseteil ausgebildete Trennwand in an dem zweiten Gehäuseteil ausgebildete und mit Dichtmaterial gefüllte Nuten eingreifen.

5. Sensormodul nach Anspruch 1, **dadurch gekennzeichnet, dass** das Gehäuse ein erstes Gehäuseteil (2) und ein zweites Gehäuseteil (3) aufweist, dass das Sensormodul ein Relativdrucksensormodul mit zwei Druckanschlüssen (20, 30) ist, dass das Aufnahmeteil (6) mit dem Boden (17) über einem der beiden Druckanschlüsse (20) angeordnet ist und mit einer Ausnehmung im Boden (17) zur Durchführung eines Drucks (P1) versehen ist und dass das erste Gehäuseteil (2) mit einem zweiten Gehäuseteil (3) abgedeckt ist, welches den anderen Druckanschluss aufweist.

6. Sensormodul nach Anspruch 1, **dadurch gekennzeichnet, dass** die elektrischen Anschlusselemente (19) des Aufnahmeteils (6) mit den elektrischen Leitern (4) des Gehäuseteils (2) verschweißt sind.

7. Sensormodul nach Anspruch 1, **dadurch gekennzeichnet, dass** das elektrisch leitende Material (27) ein Leitkleber ist.

8. Sensormodul nach einem der vorstehenden Ansprüche, **dadurch gekennzeichnet, dass** die Sensoranordnung (12,13) einen auf einen Sockel (13) aufgebrachten Silizium-Drucksensorchip (12) umfasst, der mittels Bondrähten mit den elektrischen Anschlusselementen (19) des Aufnahmeteils (6) kontaktiert ist.

9. Sensormodul nach Anspruch 1, **dadurch gekennzeichnet, dass** der wenigstens eine Kondensator (7) ein EMV-Schutzkondensator ist.

## Claims

1. Sensor module, in particular pressure sensor module, with a sensor housing (1) which has a housing part (2) with electrical conductors (4) partially embedded therein, the sensor housing having arranged in it a first inner space (10), in which a sensor arrangement (12, 13) is arranged, and a second inner space (11) which is sealed with respect to the first inner space (10) and in which at least one capacitor (7) is arranged, the sensor housing having a first housing part (2) and at least one second housing part (3), a partition (22) being formed on the first housing part (2) or on the second housing part (3), and the first inner space (10) and also the second inner space (11) being formed by the second housing part (3) being placed onto the first housing part (2), and a reception part (6) with a receptacle (18) formed by a peripheral wall (16) being arranged in the first inner space (10), in which receptacle the sensor arrangement (12, 13) is inserted and is covered with a protective cover (14) introduced into the receptacle (18), the sensor housing having a pressure connection (20, 30), by means of which the first inner space (11) and a sensor element (12) of the sensor arrangement can be acted upon with a pressure (P1, P2), the sensor arrangement (12, 13) being contacted with electrical junction elements (19) arranged on the reception part (6), which junction elements (19) are lead from the receptacle (18) into the first inner space (10) and are connected directly to junction portions (4a, 4b), arranged in the first inner space (10) on the first housing part (2), of the electrical conductors (4), and the at least one capacitor (7) arranged in the second inner space (11) being connected to at least one of the electrical conductors (4) via an electrically conductive material (27).

2. Sensor module according to Claim 1, **characterized in that** the reception part (6) is inserted into a second receptacle (26) formed on the housing part (2), which second receptacle has a wall (25) surrounding the reception part (6), and **in that** a material (9), in particular an adhesive, covering the electrical connection point of the electrical conductors (4) and of the electrical junction elements (19) is introduced between the wall (25) surrounding the reception part (6) and the said reception part (6).

3. Sensor module according to Claim 1, **characterized in that** the sensor housing (1) has a first housing part (2) which is manufactured as an injection moulding and in which the electrical conductors (4) are partially embedded as pressed-screen parts, which pressed-screen parts lead to a plug connection (5) of the sensor module on one side of the sensor housing.

4. Sensor module according to Claim 1, **characterized in that** the one peripheral wall (29) of the second housing part (3) and a partition (22) formed on the second housing part (3) engage into grooves (28) formed on the first housing part (2) and filled with sealing material (8), or **in that** a peripheral wall of the first housing part and a partition formed on the first housing part engage into grooves formed on the second housing part and filled with sealing material.

5. Sensor module according to Claim 1, **characterized in that** the housing has a first housing part (2) and a second housing part (3), **in that** the sensor module is a relative-pressure sensor module with two pressure connections (20, 30), **in that** the reception part (6) is arranged with the bottom (17) above one of the two pressure connections (20) and is provided with a recess in the bottom (17) for leading through a pressure (P1), and **in that** the first housing part (2) is covered with a second housing part (3) which has the other pressure connection.

6. Sensor module according to Claim 1, **characterized in that** the electrical junction elements (19) of the reception part (6) are welded to the electrical conductors (4) of the housing part (2).

7. Sensor module according to Claim 1, **characterized in that** the electrically conductive material (27) is a conductive adhesive.

8. Sensor module according to one of the preceding claims, **characterized in that** the sensor arrangement (12, 13) comprises a silicon pressure-sensor chip (12) which is attached to a plinth (13) and which is contacted by means of bonding wires with the electrical junction elements (19) of the reception part (6).

9. Sensor module according to Claim 1, **characterized in that** the at least one capacitor (7) is an EMC protection capacitor.

## Revendications

1. Module de détecteur, en particulier module de détecteur de pression, qui présente
un boîtier de détecteur (1) doté d'une partie de boîtier (2) dans laquelle des conducteurs électriques (4) sont partiellement incorporés,
un premier espace intérieur (10) dans lequel un système de détecteur (12, 13) est disposé et un deuxième espace intérieur (11) séparé hermétiquement du premier espace intérieur (10) et dans lequel au moins un condensateur (7) est disposé étant prévus dans le boîtier de détecteur,
le boîtier de détecteur présentant une première partie de boîtier (2) et au moins une deuxième partie de boîtier (3),
une paroi de séparation (22) étant formée sur la première partie de boîtier (2) ou la deuxième partie de boîtier (3),
le premier espace intérieur (10) et le deuxième espace intérieur (11) étant formés en plaçant la deuxième partie de boîtier (3) sur la première partie de boîtier (2),
une partie de réception (6) qui présente un logement (18) formé par une paroi périphérique (16) étant disposée dans le premier espace intérieur (10),
le système de détecteur (12, 13) étant inséré dans le logement et étant recouvert par un recouvrement de protection (14) injecté dans le logement (18),
le boîtier de détecteur présentant un raccordement de pression (20, 30) par lequel une pression (P1, P2) peut être appliquée dans le premier espace intérieur (11) et un élément de détecteur (12) du système de détecteur,
le système de détecteur (12, 13) étant mis en contact avec des éléments de raccordement électriques (19) disposés dans la partie de réception (6),
les éléments de raccordement (19) étant prolongés depuis le logement (18) jusque dans le premier espace intérieur (10) et reliés directement par des parties de raccordement (4a, 4b) à des conducteurs électriques (4) disposés dans le premier espace intérieur (10) sur la première partie de boîtier (2),
le ou les condensateurs (7) disposés dans le deuxième espace intérieur (11) étant reliés par un matériau électriquement conducteur (27) à au moins l'un des conducteurs électriques (4).

2. Module de détecteur selon la revendication 1, **caractérisé en ce que** la partie de réception (6) est insérée dans un deuxième logement (26) formé sur la partie de boîtier (2), le deuxième logement présentant une paroi (25) qui entoure la partie de réception (6), et **en ce qu'**un matériau (9), en particulier un adhésif, qui recouvre l'emplacement de raccordement électrique des conducteurs électriques (4) et des éléments (19) de raccordement électriques est placé entre la paroi (25) qui entoure la partie de réception et la partie de réception (6).

3. Module de détecteur selon la revendication 1, **caractérisé en ce que** le boîtier de détecteur (1) présente une première partie de boîtier (2) réalisée sous la forme d'une pièce moulée par injection dans laquelle les conducteurs électriques (4) sont incorporés partiellement sous la forme de pièces en treillis estampé, les pièces en treillis estampé conduisant sur un côté du boîtier de détecteur à une borne de raccordement (5) du module de détecteur.

4. Module de détecteur selon la revendication 1, **caractérisé en ce qu'**une paroi périphérique (29) de la deuxième partie de boîtier (3) et une paroi de séparation (22) formée sur la deuxième partie de boîtier (3) s'engagent dans des rainures (28) formées sur la première partie de boîtier (2) et remplies d'un matériau d'étanchéité (8) ou **en ce qu'**une paroi périphérique de la première partie de boîtier et une paroi de séparation formée sur la deuxième partie de boîtier s'engagent dans des rainures formées sur la deuxième partie de boîtier et remplies d'un matériau d'étanchéité.

5. Module de détecteur selon la revendication 1, **caractérisé en ce que** le boîtier présente une première partie de boîtier (2) et une deuxième partie de boîtier (3), **en ce que** le module de détecteur est un module de détecteur de pression relative qui présente deux raccordements de pression (20, 30), **en ce que** la partie de réception (6) est disposée avec son fond (17) au-dessus de l'un (20) des deux raccordements de pression et est dotée d'un logement prévu dans son fond (17) pour amener une pression (P1) et **en ce que** la première partie de boîtier (2) est recouverte par une deuxième partie de boîtier (3) qui présente l'autre raccordement de pression.

6. Module de détecteur selon la revendication 1, **caractérisé en ce que** les éléments (19) de raccordement électriques de la partie de réception (6) sont soudés aux conducteurs électriques (4) de la partie de boîtier (2) .

7. Module de détecteur selon la revendication 1, **caractérisé en ce que** le matériau électriquement conducteur (27) est un adhésif conducteur.

8. Module de détecteur selon l'une des revendications précédentes, **caractérisé en ce que** le système de détecteur (12, 13) comprend une puce (12) de détection de pression en silicium appliquée sur un socle (13) et mise en contact au moyen de fils de liaison avec les éléments (19) de raccordement électriques de la partie de réception (6).

9. Module de détecteur selon la revendication 1, **caractérisé en ce que** le condensateur (7) est au moins un condensateur de protection EMV.
